Europäisches Patentamt

European Patent Office

Office européen des brevets

(19)

(11) Veröffentlichungsnummer: **0 006 500**
**B1**

(12) **EUROPÄISCHE PATENTSCHRIFT**

(45) Veröffentlichungstag der Patentschrift: **20.05.81**

(21) Anmeldenummer: **79101814.6**

(22) Anmeldetag: **08.06.79**

(51) Int. Cl.³: **F 16 K 15/20, B 60 C 29/00**

(54) Ventil für einen Fahrzeugreifen.

(30) Priorität: **04.07.78 DE 7820058 U**

(43) Veröffentlichungstag der Anmeldung:
**09.01.80 Patentblatt 80/1**

(45) Bekanntmachung des Hinweises auf die Patenterteilung:
**20.05.81 Patentblatt 81/20**

(84) Benannte Vertragsstaaten:
**DE FR GB IT SE**

(56) Entgegenhaltungen:
**DE - B - D20 672 II/63e**
**DE - B - 2 303 646**
**DE - C - 1 028 450**
**DE - U - 7 207 714**
**US - A - 2 830 641**
**US - A - 2 835 304**
**US - A - 2 995 168**

(73) Patentinhaber: **BAYERISCHE MOTOREN WERKE**
**Aktiengesellschaft**
**Postfach 40 02 40**
**D-8000 München 40 (DE)**

(72) Erfinder: **Eder, Georg**
**Mühlenstrasse 5**
**D-8206 Götting (DE)**
Erfinder: **Hadrys, Jochem**
**Pappelgasse 19b**
**D-8044 Unterschleissheim (DE)**
Erfinder: **Dormeier, Herbert**
**Dorfstrasse 56**
**D-8034 Germering (DE)**

Courier Press, Leamington Spa, England.

## Ventil für einen Fahrzeugreifen

Die Erfindung bezieht sich auf ein Ventil für einen Fahrzeugreifen, insbesondere für einen Hochgeschwindigkeitsreifen von Personenkraftwagen, mit einem in eine Öffnung der Felge einknöpfbaren äußeren Dichtkörper aus gummielastischem Material, der eine an der Einknöpfstelle des Ventils vorgesehene innenliegende und eine außenliegende Stützschulter aufweist, die bei in die Felge eingeknöpftem Dichtkörper an dieser anliegen.

Bei einem bekannten Ventil dieser Art (US—A—2 830 641) ist der Dichtkörper mit zwei radialgerichteten Stützschultern versehen, die sich nach seiner Einknöpfung in die Felgenöffnung mit Vorspannung an die Felge anschmiegen. Bei im Fahrbetrieb auftretenden Fliehkräften biegt sich der über die Felge hinausragende Endabschnitt des Dichtkörpers in vergleichsweise großem Beugewinkel zur zugewandten Felgenwandung hin ab, wodurch er nach längerem Betriebseinsatz undicht werden kann.

Um das Abbiegen des Ventil-Dichtkörpers im Fahrbetrieb zu vermeiden, ist ein Ventil geschaffen worden (in der DE—B—D 20 672 II/63e offenbart), das mit einem radialen Vorsprung versehen ist. Dieser wird als ein loses Teil auf den über die Felge hinausragenden Endabschnitt des Dichtkörpers aufgesteckt, wobei er an der zugewandten Felgenwandung anliegt. Hierbei entsteht jedoch nachteiligerweise bei der Ventil-Montage ein erhöhter Arbeitsaufwand, darüber hinaus können sich auch Montagefehler ergeben.

Aufgabe der Erfindung ist es daher, ein Ventil der eingangs genannten Gattung derart auszubilden, daß sich der Dichtkörper nur im Bereich eines relativ kleinen Beugewinkels abbiegt, wobei das Ventil aber dennoch kostengünstig herzustellen, sowie rasch und problemlos zu montieren ist.

Die Lösung der Aufgabe besteht erfindungsgemäß darin, daß der Dichtkörper an seinem nach außen gerichteten Endabschnitt einstückig mit einer weiteren, radial gerichteten, sowie über den gesamten Außenumfang verlaufenden Stützschulter versehen ist, deren der Felgenwandung zugewandter Außenumfang sich ab einem bestimmten Beugewinkel des Dichtkörpers an der Felgenwandung abstützt.

Die beim erfindungsgemäßen Ventil vorgesehene weitere, sich an der Felgenwandung abstützende Stützschulter gewährleistet im Fahrbetrieb eine zuverlässige Abstützung des Dichtkörper-Endabschnitts, wobei nur ein sehr kleiner Beugewinkel entsteht. Ferner wird die Fahrsicherheit erhöht, denn die Stützschulter kann sich selbst bei höchster Fahrzeuggeschwindigkeit nicht vom Dichtkörper ablösen. Darüber hinaus ist das erfindungsgemäße Ventil vergleichsweise billig herstellbar und einfach montierbar.

In Ausgestaltung der Erfindung ist vorgesehen, daß die Stützschulter aus einer Anzahl von am Umfang des Dichtkörpers angeordneten Zungen besteht, die im Längsschnitt des Ventils jeweils eine firstförmige Außenform aufweisen und am Scheitelpunkt abgerundet sind.

Nach einer weiteren Ausgestaltung der Erfindung ist die Stützschulter als ein Ringwulst ausgebildet, der sich nach außen hin konisch, vorzugsweise unter einem Winkel von etwa 45°, verjüngt, während er auf der zur Felge hin gekehrten Seite konisch unter einem Winkel von weniger als 90°, insbesondere von 80°, zum sich an die Kreisringfläche anschließenden Ventilschaft eingezogen ist.

Ausführungsbeispiele der Erfindung sind in der Zeichnung dargestellt. Es zeigt:

Fig. 1 einen Teilschnitt einer Felge mit einem eingesetzten Ventil,

Fig. 2 eine vergrößerte Einzelansicht des Ventils, dessen Dichtkörper eine Anzahl von Zungen aufweist,

Fig. 3 eine Ansicht in Pfeilrichtung A von Fig. 2,

Fig. 4 eine etwas abgewandelte Ausführungsform des in Fig. 2 dargestellten Ventil-Dichtkörpers im Teilschnitt.

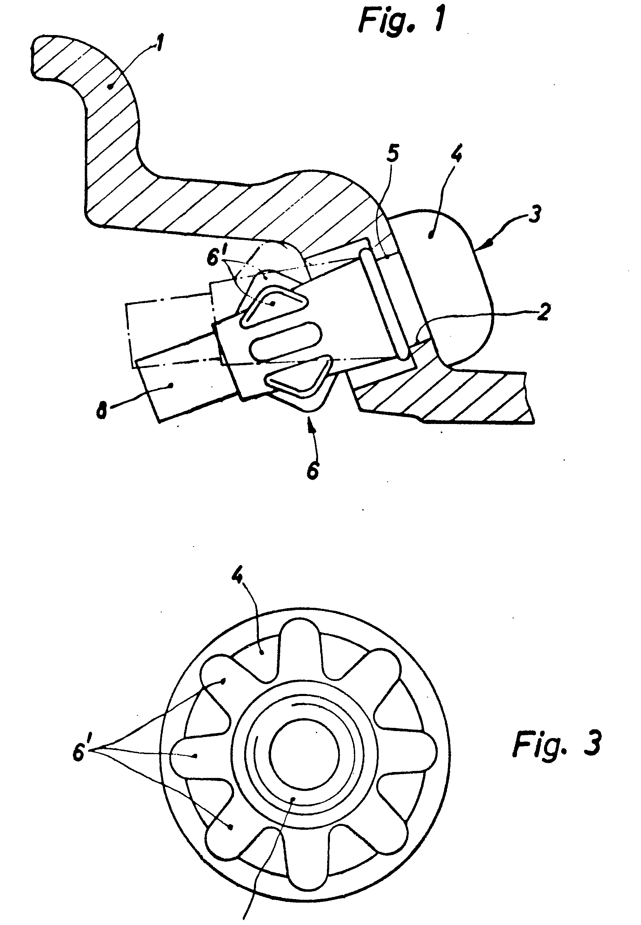

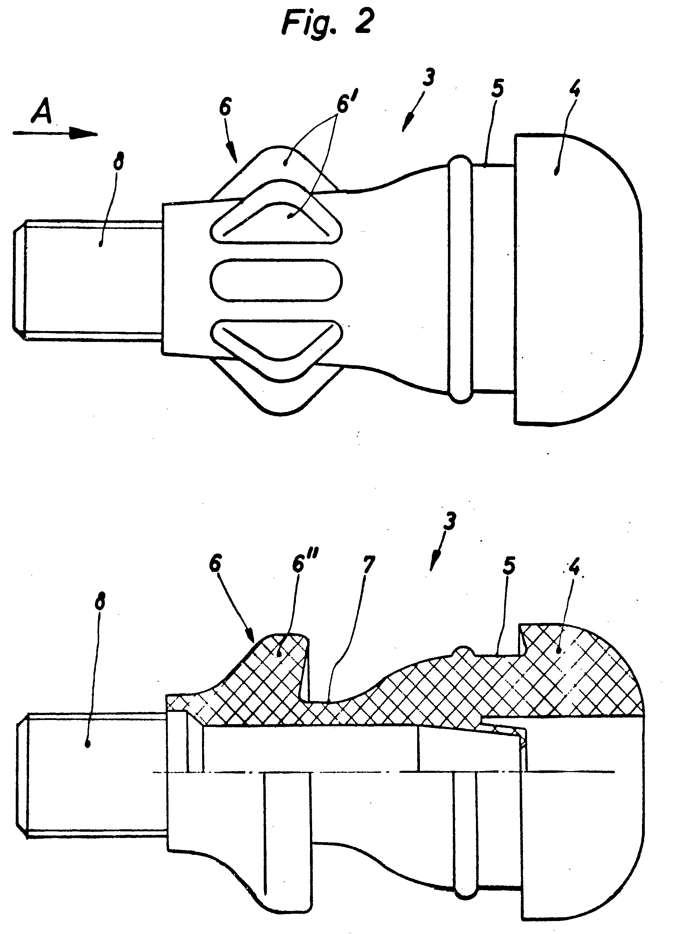

Die in Fig. 1 dargestellte Felge 1 eines Fahrzeugrades ist mit einer Öffnung 2 versehen, in die ein Ventil 3 des nicht dargestellten Fahrzeugreifens eingesetzt ist. Das Ventil 3 — welches Fig. 2 vergrößert zeigt — weist einen äußeren Dichtkörper 4 aus gummielastischem Material auf, der über eine Umfangsnut 5 in die Öffnung 2 eingeknöpft wird, wobei eine am Dichtkörper 4 vorgesehene innenliegende und eine außenliegende Stützschulter an der Felge 1 anliegt. Der Dichtkörper 4 ist mit einem Ventilstutzen 8 festhaftend verbunden.

An seinem nach außen gerichteten, d.h. über die Felge 1 hinausstehenden Endabschnitt ist der Dichtkörper 4 einstückig mit einer weiteren, radial gerichteten Stützschulter 6 versehen, die über den gesamten Außenumfang verläuft. Im vorliegenden Ausführungsbeispiel besteht die Stützschulter 6 aus einer Anzahl von Zungen 6', die in regelmäßiger Anordnung am Umfang des Dichtkörpers 4 vorgesehen sind. Die Zungen 6' weisen in einem Längsschnitt des Ventils 3 eine firstförmige Außenform auf und sind an ihrem Scheitelpunkt abgerundet (Fig. 2 und 3). Der Umkreisdurchmesser der Zungen 6' ist etwas größer als der Durchmesser der Öffnung 2 in der Felge 1, derart, daß beim Einstecken des Dichtkörpers 4 in die Öffnung 2 die Zungen 6' etwas in radialer Richtung des Dichtkörpers 4 zusammengedrückt werden; im montierten Zustand des Ventils 3 nehmen die Zungen 6' dann wieder ihre Ursprungsform ein. Bei hoher Fahrzeuggeschwindigkeit wird der Dichtkörper 4 des Ventils 3 durch Fliehkraftwirkung zunächst geringfügig in radialer Richtung der Felge 1 nach außen abgebogen und stützt sich dann mit wenigstens einer seiner Zungen 6' an der zugewandten Felgenwandung ab, wie die strichpunktierten Linien in Fig. 1 zeigen. Hierdurch ist verhindert, daß der Dichtkörper 4 unter einem zu großen Beugewinkel abgebogen wird, was aus den eingangs erläuterten Gründen zu vermeiden ist.

Beim Ausführungsbeispiel nach Fig. 4 ist die Stützschulter 6 des Dichtkörpers 4 als ein Ringwulst 6" ausgebildet. Dieser verjüngt sich einerseits nach außen hin konisch unter einem Winkel von etwa 45°, während er auf seiner gegenüberliegenden Seite konisch unter einem Winkel von etwa 80° zum sich an die Kreisringfläche anschließenden Ventilschaft 7 eingezogen ist. Bei Montage des Ventils 3 in die Felge 1 ist der Ringwulst 6" — dessen Durchmesser größer ist als der Durchmesser der Öffnung 2 — dank seines außenliegenden konischen Abschnitts selbstzentrierend in die Öffnung 2 der Felge 1 einführbar. Bei diesem Vorgang wird der Ringwulst 6" des gummielastischen Dichtkörpers 4 einerseits radial gleichmäßig etwas zusammengedrückt, während sich andererseits die Ebene seiner innenliegenden Kreisringfläche wegen deren großen Radialerstreckung geringfügig einwärts neigt, was auch in geringem Maße zur Verkleinerung des Durchmessers des Ringwulstes 6" beiträgt. Zum gewollten Einwärtsneigen der Kreisringfläche ist ferner auch der schräge, einwärts gerichtete Verlauf von deren Ebene vorteilhaft. Hierdurch ist der Dichtkörper 4 unter verhältnismäßig geringem Kraftaufwand in die Öffnung 2 einsteckbar.

## Patentansprüche

1. Ventil für einen Fahrzeugreifen, insbesondere für einen Hochgeschwindigkeitsreifen von Personenkraftwagen, mit einem in eine Öffnung (2) der Felge (1) einknöpfbaren äußeren Dichtkörper (4) aus gummielastischem Material, der eine an der Einknöpfstelle des Ventils (3) vorgesehene innenliegende und eine außenliegende Stützschulter aufweist, die bei in die Felge (1) eingeknöpftem Dichtkörper (4) an dieser anliegen, dadurch gekennzeichnet, daß der Dichtkörper (4) an seinem nach außen gerichteten Endabschnitt einstückig mit einer weiteren, radial gerichteten, sowie über den gesamten Außenumfang verlaufenden Stützschulter (6) versehen ist, deren der Felgenwandung zugewandter Außenumfang sich ab einem bestimmten Beugewinkel des Dichtkörpers (4) an der Felgenwandung abstützt.

2. Ventil nach Anspruch 1, dadurch gekennzeichnet, daß die Stützschulter (6) aus einer Anzahl von am Umfang des Dichtkörpers (4) angeordneten Zungen (6') besteht, die im Längsschnitt des Ventils (3) jeweils eine firstförmige Außenform aufweisen und am Scheitelpunkt abgerundet sind.

3. Ventil nach Anspruch 1, dadurch gekennzeichnet, daß die Stützschulter (6) als ein Ringwulst (6") ausgebildet ist, der sich nach außen hin konisch, vorzugsweise unter einem Winkel von etwa 45°, verjüngt, während er auf der zur Felge (1) hin gekehrten Seite konisch unter einem Winkel von weniger als 90°, insbesondere von 80°, zum sich an die Kreisringfläche anschließenden Ventilschaft (7) eingezogen ist.

## Claims

1. A valve for a vehicle tyre, especially for a high speed tyre of a passenger motor vehicle, having an outer sealing element (4) made of rubbery elastomeric material which can be engaged, by being pressed, in an opening (2) in the rim (1), and has an inner backing shoulder, provided at the place of engagement of the valve (3), and an outer backing shoulder, which shoulders bear against the rim (1) when the sealing element (4) is pressed into the rim, characterised in that the sealing element (4) is provided, at its outwardly-directed end portion, with a further radially-directed, backing shoulder (6) which is integral with the sealing element and extends over the entire outer periphery, the outer periphery of this shoulder which faces the wall of the rim being supported on the wall of the rim when the sealing element (4) deflects beyond a certain angle.

2. A valve according to claim 1, characterised in that the backing shoulder (6) comprises a plurality of tongues (6') which are arranged on the periphery of the sealing element (4) and each of which, as viewed in the longitudinal section of the valve (3), has a ridge-shaped outer form and is rounded at the apex.

3. A valve according to claim 1, characterised in that the backing shoulder (6) is formed as an annular protrusion (6") which tapers outwardly, preferably at an angle of approximately 45°, while, at the side facing the rim (1), it slopes inwardly at an angle of less than 90°, preferably at an angle of 80°, to the valve stem (7) adjoining the annular face.

## Revendications

1. Valve pour um pneumatique de véhicule, notamment pour un pneumatique à grande vitesse de voitures de tourisme, avec un corps d'étanchéité extérieur (4) en matière élastique comme du caoutchouc s'enclenchant dans une ouverture (2) de la jante (1), ce corps d'étanchéité présentant un épaulement d'appui intérieur prévu dans la zone d'enclenchement de la valve (3) et un épaulement d'appui extérieur, reposant sur la jante (1) lorsque le corps d'étanchéité (4) est enclenché dans celle-ci, caractérisée en ce que le corps d'étanchéité (4) est, dans sa partie d'extrémité dirigée vers l'extérieur, muni en une seule pièce d'un autre épaulement d'extrémité (6) dirigé radialement et s'étendant sur la totalité du pourtour, la périphérie de cet épaulement, dirigée vers la paroi de la jante, s'appuyant sur cette paroi au-delà d'un angle de pliage déterminé du corps d'étanchéité (4).

2. Valve selon la revendication 1, caractérisée en ce que l'épaulement d'appui (6) est constitué par une série de pattes (6') disposées sur le pourtour du corps d'étanchéité (4), chaque patte présentant, suivant la coupe longitudinale de la valve (3), une forme extérieure en toit avec un arrondi au sommet.

3. Soupape selon la revendication 1, caractérisée en ce que l'épaulement d'appui (6) est réalisé sous forme de bourrelet annulaire (6'') allant en s'amincissant en cône vers l'extérieur, de préférence sous un angle de 45° environ, tandis qu'il est en surplomb en cône du côté dirigé vers la jante (1) sous un angle inférieur à 90°, notamment de 80°, vers le fût de valve (7) se raccordant à la surface annulaire.

*Fig. 1*

1

5

4

3

6'

2

8

6

4

6'

*Fig. 3*

1

# Fig. 2